# EUROPEAN PATENT APPLICATION

(11) **EP 2 169 950 A2**
(43) Date of publication of application: **31.03.2010**
(21) Application number: 09007677.9
(22) Date of filing: 10.06.2009
(51) Int. Cl.: H04N 5/445

(54) **Character code conversion apparatus and character code conversion method**

(30) Priority: 30.09.2008 JP 2008255149
(71) Applicant: Kabushiki Kaisha Toshiba, Minato-ku, Tokyo 105-8001 (JP)
(72) Inventor: Morikawa, Jiro, Tokyo 105-8001 (JP)
(74) Representative: HOFFMANN EITLE

(57) **Abstract**

According to one embodiment, a character code conversion apparatus includes a storage module (66, 68) configured to store first and second character tables and combination rules of character codes designated by the first character table, a table selection module (51, 65) configured to check a combination violation of character codes detected from a reception signal based on the combination rules of character codes, and to select one of the first and second character tables based on the checking result, and a conversion module (51) configured to convert the detected character codes into display information based on the character table selected by the table selection module.

## Description

One embodiment of the invention relates to a character code conversion apparatus and character code conversion method, which appropriately display character codes included in DVB (Digital Video Broadcasting)-SI (Service Information).

In recent years, digital television broadcasting based on the DVB specification has started. Such digital television broadcasting based on the DVB specification can provide interactive services. Jpn. Pat. Appln. KOKAI Publication No. 2006-512689 discloses a technique for avoiding impeditive download processing and complex and troublesome management for the user so as to surely execute such interactive services.

Digital television broadcasting based on the DVB specification has been put into practical applications around the world, and character codes included in DVB-SI are converted into appropriate display information by one character table selected from various character tables.

For example, DVB-SI can transmit character strings of an electronic program guide (EPG). At this time, a control code (several bytes from the head position) included in the DVB-SI designates a character table to be selected. However, when the first byte of the control code ranges from 0x20 to 0xFF, it is specified to select character table 00 as a default character table.

It is important to appropriately select a character table. If a wrong selection is made, character strings can no longer be appropriately displayed. For example, alphabetical characters with diacritical marks may turn into garbled characters.

However, broadcast stations of France, Germany, and the like go against the aforementioned rule, and negotiate to select character table 05 as a default character table when the first byte of the control code ranges from 0x20 to 0xFF.

For this reason, many receivers switch a default character setting according to a country setting by the user. For example, when the user sets France or Germany in a receiver, the receiver selects character table 05 as a default character table.

Alternatively, a receiver includes a user interface that prompts the user to select character table 00 or 05, and when the user finds character description errors from program information or the like, he or she changes selection of character table 00 or 05 via this user interface.

Upon selling a DTV (Digital TV) to a country where DVB-T (Terrestrial) broadcasting has already started, a seller can determine based on broadcast information of a buying country which of character tables 00 and 05 is adopted as a default character table. That is, the seller can sell receivers appropriate for the broadcast circumstances of the purchasing country.

On the other hand, upon selling a DTV to a country where DVB-T broadcasting has not started yet, it is not easy for the seller to determine which of character tables 00 and 05 will be adopted as a default character table for future DVB-T broadcasting. In such case, the seller has to sell receivers including the aforementioned user interface required to select a character table.

As described above, since the default character table is not standardized, a load is imposed on the manufacture or seller of receivers.

As described above, upon selling a DTV to a country where DVB-T broadcasting has not started yet, for example, receivers including the aforementioned user interface required to select a character table are sold. However, when the user who uses such receiver sees garbled characters, he or she has to switch a character table via the aforementioned user interface required to select a character table. Such switching operation imposes a load on the user.

It is an object of the invention to provide a character code conversion apparatus and character code conversion method which can prevent any error in the selection of a character table.

A character code conversion apparatus according to one embodiment of the invention comprises: a storage module configured to store first and second character tables and combination rules of character codes designated by the first character table; a table selection module configured to check for a combination violation of character codes detected from a reception signal based on the combination rules of character codes, and to select one of the first and second character tables based on the checking result; and a conversion module configured to convert the detected character codes into display information based on the character table selected by the table selection module.

A character code conversion method according to one embodiment of the invention comprises: checking a combination violation of character codes detected from a reception signal based on combination rules of character codes designated by a first character table, and selecting one of the first character table and a second character table based on the checking result; and converting the detected character codes into display information based on the selected character table.

The invention can be more fully understood from the following detailed description when taken in conjunction with the accompanying drawings, in which:
FIG. 1 is a schematic block diagram showing the arrangement of a digital television broadcast receiver according to an embodiment of the invention;
FIG. 2A is a view showing character table 00;
FIG. 2B is a view showing character table 05;
FIG. 3 is a view for explaining a control code;
FIG. 4 is a view showing an example of a combined code which is specified in character table 00;
FIG. 5 is a view showing an example of a combined code which is not specified in character table 00;
FIG. 6 is a view showing an example of an alphabetical code with a diacritical mark in character table 05;
FIG. 7 is a view showing the first example of a language setting window according to the embodiment;
FIG. 8 is a view showing the second example of a language setting window according to the embodiment;
FIG. 9 is a view showing the first example of a confirmation operation dialog according to the embodiment; and
FIG. 10 is a view showing the second example of a confirmation operation dialog according to the embodiment.

Various embodiments according to the invention will be described hereinafter with reference to the accompanying drawings. In general, a character code conversion apparatus according to one embodiment of the invention comprises: a storage module configured to store first and second character tables and combination rules of character codes designated by the first character table; a table selection module configured to check a combination violation of character codes detected from a reception signal based on the combination rules of character codes, and to select one of the first and second character tables based on the checking result; and a conversion module configured to convert the detected character codes into display information based on the character table selected by the table selection module.

Embodiments of the invention will be described hereinafter with reference to the drawings.

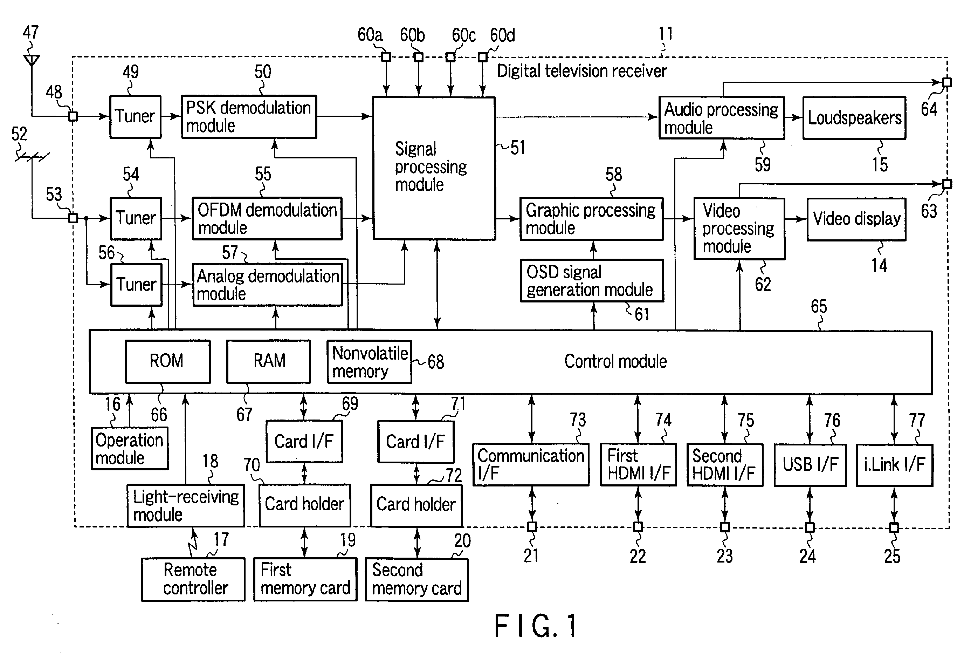

FIG. 1 is a schematic block diagram showing the arrangement of a digital television broadcast receiver (character code conversion apparatus) according to an embodiment of the invention.

FIG. 1 shows a principal signal processing system of a digital television broadcast receiver 11 described above. More specifically, a satellite digital television broadcast signal received by a BS/CS digital broadcast receiving antenna 47 is supplied to a satellite digital broadcast tuner 49 via an input terminal 48, thus tuning to a broadcast signal of a desired channel.

The broadcast signal tuned to by this tuner 49 is supplied to a PSK (phase shift keying) demodulation module 50, and is demodulated to digital video and audio signals. The demodulated digital video and audio signals are then output to a signal processing module 51.

A terrestrial digital television broadcast signal received by a terrestrial broadcast receiving antenna 52 is supplied to a terrestrial digital broadcast tuner 54 via an input terminal 53, thus tuning a broadcast signal of a desired channel.

The broadcast signal tuned by this tuner 54 is supplied to an OFDM (orthogonal frequency division multiplexing) demodulation module 55, and is demodulated to digital video and audio signals. The demodulated digital video and audio signals are then output to the signal processing module 51.

A terrestrial analog television broadcast signal received by the terrestrial broadcast receiving antenna 52 is supplied to a terrestrial analog broadcast tuner 56 via the input terminal 53, thus tuning to a broadcast signal of a desired channel. The broadcast signal tuned to by this tuner 56 is supplied to an analog demodulation module 57, and is demodulated to analog video and audio signals. The demodulated analog video and audio signals are then output to the signal processing module 51.

The signal processing module 51 selectively applies predetermined digital signal processing to the digital video and audio signals supplied from the PSK demodulation module 50 and OFDM demodulation module 55, and outputs the processed digital video and audio signals to a graphic processing module 58 and audio processing module 59.

To the signal processing module 51, a plurality of (four in FIG. 1) input terminals 60a, 60b, 60c, and 60d are connected. These input terminals 60a to 60d respectively allow input of analog video and audio signals from outside the digital television receiver 11.

The signal processing module 51 selectively converts analog video and audio signals supplied from the analog demodulation module 57 and the input terminals 60a to 60d into digital video and audio signals, applies predetermined digital signal processing to these digital video and audio signals, and outputs them to the graphic processing module 58 and audio processing module 59.

Of these modules, the graphic processing module 58 has a function of superimposing an OSD (on screen display) signal generated by an OSD signal generation module 61 on the digital video signal supplied from the signal processing module 51, and outputting the superimposed signal. This graphic processing module 58 can selectively output the output video signal from the signal processing module 51 and the output OSD signal from the OSD signal generation module 61, or can combine both these outputs to respectively form halves of the screen and can output the combined output.

The digital video signal output from the graphic processing module 58 is supplied to a video processing module 62. The video signal processed by the video processing module 62 is supplied to a video display 14, and also to an output terminal 63. The video display 14 displays a video based on the video signal. When an external apparatus is connected to the output terminal 63, the video signal supplied to the output terminal 63 is input to the external apparatus.

The audio processing module 59 converts the input digital audio signal into an analog audio signal in a format that can be played back by loudspeakers 15, and outputs the analog audio signal to the loudspeakers 15 for playback. Also, the audio processing module 59 externally outputs the analog audio signal via an output terminal 64.

Note that all the operations, including the aforementioned various reception operations, of this digital television receiver 11 are systematically controlled by a control module 65. This control module 65 incorporates a CPU (central processing unit) and the like, receives operation information from an operation module 16 or that output from a remote controller 17 via a light-receiving module 18, and controls respective modules to reflect the operation contents.

In this case, the control module 65 mainly uses a ROM (read only memory) 66 that stores a control program to be executed by its CPU, a RAM (random access memory) 67 that provides a work area for the CPU, and a nonvolatile memory 68 that stores various kinds of setting information and control information, and the like.

This control module 65 is connected to a card holder 70, which can receive a first memory card 19, via a card I/F (interface) 69. As a result, the control module 65 can exchange information with the first memory card 19 attached to the card holder 70 via the card I/F 69.

This control module 65 is connected to a card holder 72, which can receive a second memory card 20, via a card I/F (interface) 71. Therefore, the control module 65 can exchange information with the second memory card 20 attached to the card holder 72 via the card I/F 71.

The control module 65 is connected to a LAN terminal 21 via a communication I/F 73. The control module 65 can thus exchange information with a LAN-compatible device connected to the LAN terminal 21 via the communication I/F 73. In this case, the control module 65 has a DHCP (dynamic host configuration protocol) server function, and controls the LAN-compatible device connected to the LAN terminal 21 by assigning an IP (internet protocol) address to it.

Furthermore, the control module 65 is connected to a first HDMI terminal 22 via a first HDMI I/F 74. As a result, the control module 65 can exchange information with an HDMI-compatible device connected to the first HDMI terminal 22 via the first HDMI I/F 74. Also, the control module 65 is connected to a second HDMI terminal 23 via a second HDMI I/F 75. Hence, the control module 65 can exchange information with an HDMI-compatible device connected to the second HDMI terminal 23 via the second HDMI I/F 75.

The control module 65 is connected to a USB terminal 24 via a USB I/F 76. As a result, the control module 65 can exchange information with USB-compatible devices connected to the USB terminal 24 via the USB I/F 76.

Moreover, the control module 65 is connected to an i.Link terminal 25 via an i.Link I/F 77. As a consequence, the control module 65 can exchange information with i.Link-compatible devices connected to the i.Link terminal 25 via the i.Link I/F 77.

Character code conversion by the aforementioned digital television broadcast receiver will be described below.

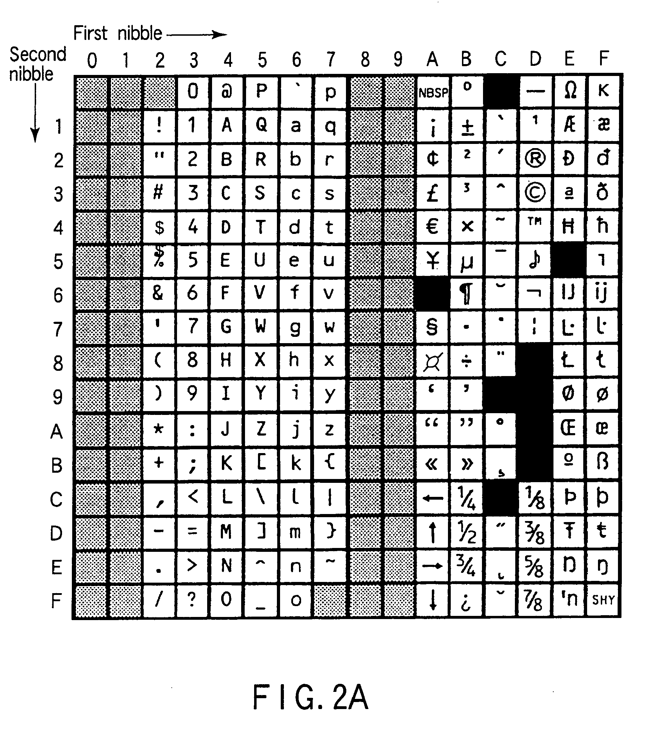

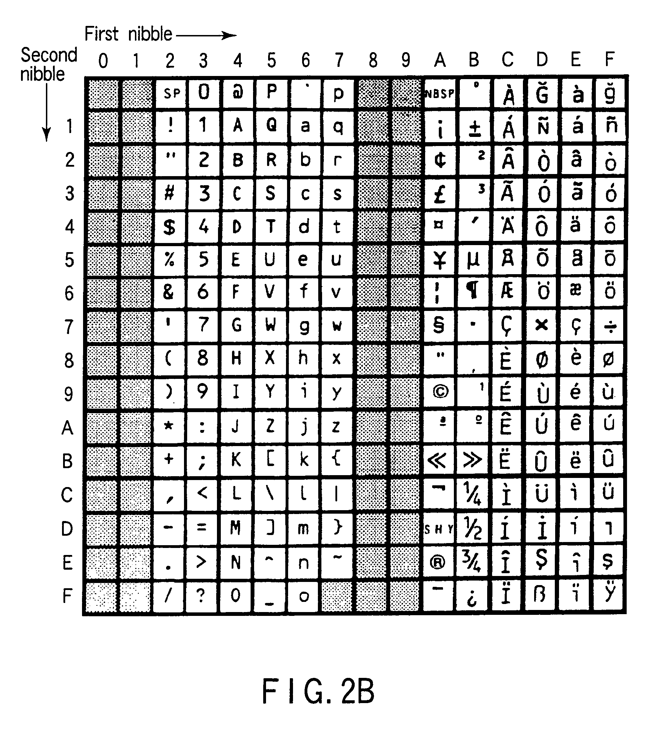

The ROM 66 or nonvolatile memory 68 stores a plurality of character tables. The plurality of character tables include, for example, character table 00 (first character table) shown in FIG. 2A, and character table 05 (second character table) shown in FIG. 2B. Furthermore, the ROM 66 or nonvolatile memory 68 also stores combination rules of character codes designated by character table 00. The combination rules include, for example, possible combination information indicating pairs of character codes that can be combined of character table 00. More specifically, the combination rules include possible combination information indicating pairs of character codes that can be combined including diacritical mark codes of character table 00.

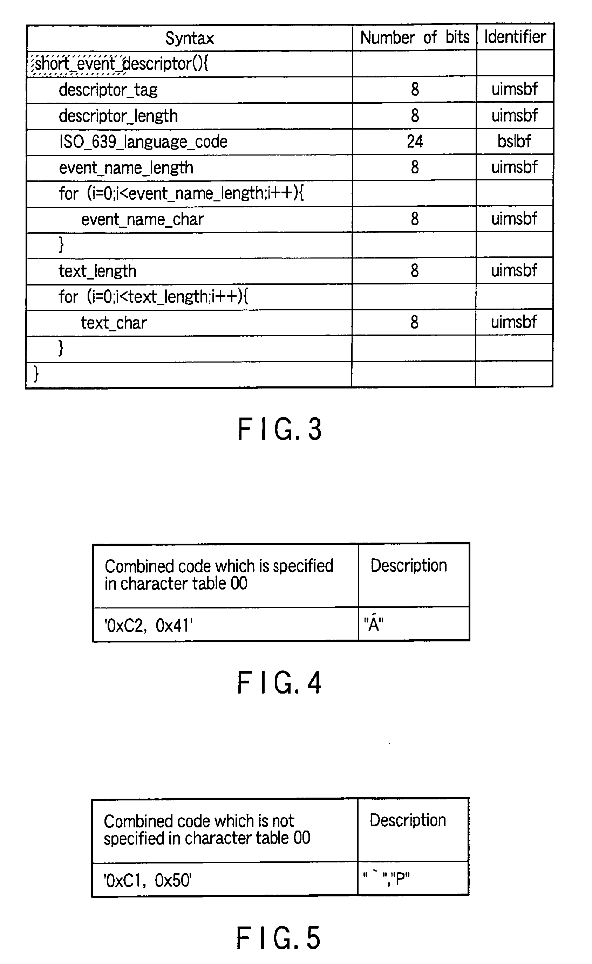

Character table 00 and diacritical marks will be described below. As shown in FIG. 2A, diacritical marks are defined in the C-th column of character table 00. Also, alphabetical characters are defined in the fourth to seventh columns of character table 00, and a space is defined in 0x20. By combining a diacritical mark, alphabetical character, and space, a 2-byte alphabetical character with a diacritical mark can be described. For example, by combining 0xC2 and 0x41, a diacritical mark shown in FIG. 4 can be described. On the other hand, characters that can be described using the 2-byte alphabetical characters with diacritical marks are specified by ISO/IEC 6937 as those used in Romance language-speaking countries.

However, the combinations of the diacritical marks in the C-th column and alphabetical characters in the fourth to seventh columns using character table 00 include those which are not used since they are not specified by ISO/IEC 6937. For example, as shown in FIG. 5, a combination of 0xC1 and 0x50 is not specified by ISO/IEC 6937. Also, combinations in which character codes other than alphabetical characters or a space are allocated after diacritical marks in the C-th column of character table 00 are not specified by ISO/IEC 6937.

That is, the aforementioned combination rules include possible combination information indicating pairs of character codes which are specified by ISO/IEC 6937 and can be combined. Or, the aforementioned combination rules may include possible combination information indicating pairs of character codes which are not specified by ISO/IEC 6937 and cannot be combined.

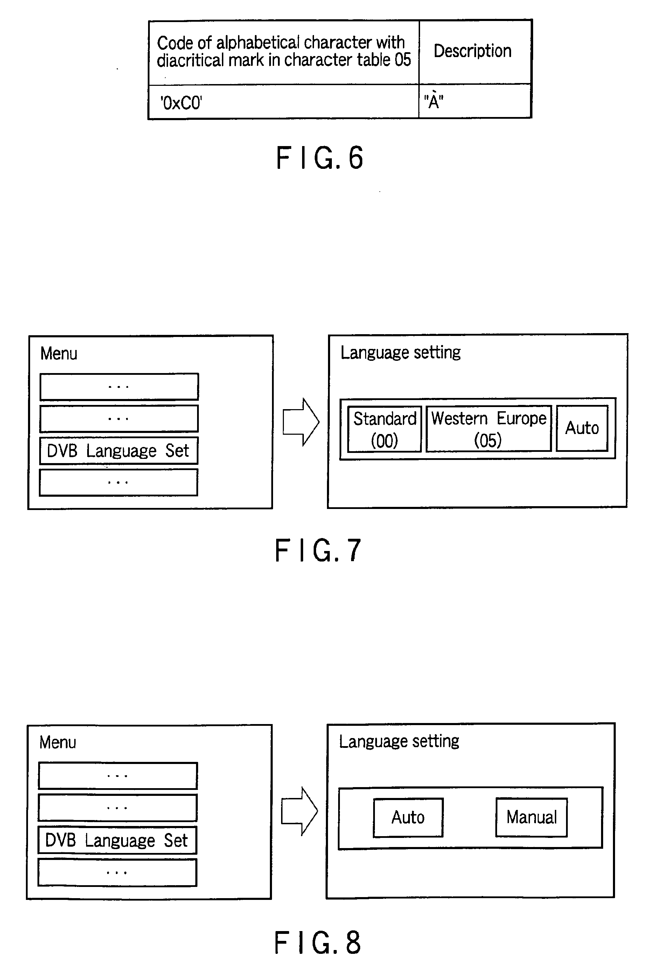

Character table 05 will be described below. As shown in FIG. 2B, character table 05 defines principal alphabetical characters with diacritical marks used in Europe in the C-th column and subsequent columns. Each of these alphabetical characters with diacritical marks can be described by 1 byte. For example, as shown in FIG. 6, an alphabetical character with a diacritical mark can be described simply by 0xC0. That is, each character code of character table 05 can describe an alphabetical character with a diacritical mark by a 1-byte code in place of a 2-byte combined code.

Detection of a selection error of a character table will be described below.

As described above, character table 05 can express all characters (alphabetical characters with diacritical marks) by 1 byte, while character table 00 describes alphabetical characters with diacritical marks by combining codes of 2 bytes. In addition, the combinations of character codes of character table 00 are limited.

For this reason, when the digital television broadcast receiver erroneously selects character table 00 in place of character table 05 to be originally selected, it can detect a selection error of a character table. That is, the signal processing module 51 and control module 65 of the digital television broadcast receiver check combination violations of character codes detected from a reception signal based on the combination rules of character codes, and select one of character tables 00 and 05 based on this checking result.

That is, when the signal processing module 51 detects any combination violation of character codes, the control module 65 selects character table 05, and the signal processing module 51 converts character codes into display information based on character table 05. When the signal processing module 51 does not detect any combination violation of character codes, the control module 65 selects character table 00, and the signal processing module 51 converts character codes into display information based on character table 00.

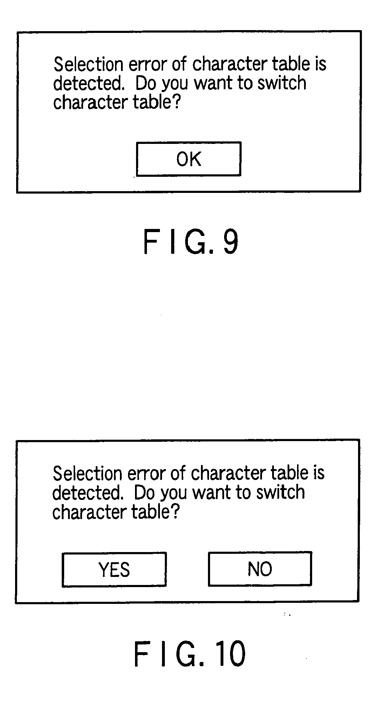

The overall sequence of character code conversion processing will be described below with reference to examples of language setting windows shown in FIGS. 7 and 8 and confirmation operation dialogs shown in FIGS. 9 and 10.

The user can designate to display a menu window via the operation module 16 or remote controller 17. In response to this operation, the digital television broadcast receiver displays a menu window shown in FIG. 7 or 8 on the video display 14.

The menu window shown in FIG. 7 or 8 includes a language setting item (DVB Language Set), and the user can select the language setting item via the operation module 16 or remote controller 17. Upon selection of the language setting item, the menu window is switched to a language setting window. As shown in FIG. 7, the language setting window includes Standard (character table 00), Western Europe (character table 05), and Auto items. Or, as shown in FIG. 8, the language setting window includes Auto and Manual items.

The user can select the item on the language setting window shown in FIG. 7 via the operation module 16 or remote controller 17. Upon selection of the Standard item (Standard mode), the signal processing module 51 and control module 65 select a character table based on a control code (see text char in FIG. 3) included in DVB-SI. That is, when the first byte of the control code ranges from 0x20 to 0xFF, the signal processing module 51 and control module 65 select character table 00 as a default character table, and convert character codes into display information based on selected character table 00. Even when the Western Europe item (Western Europe mode) is selected, the signal processing module 51 and control module 65 select a character table based on a control code included in the DVB-SI. However, in this case, when the first byte of the control code ranges from 0x20 to 0xFF, the signal processing module 51 and control module 65 select character table 05 as a default character table, and convert character codes into display information based on selected character table 05.

Upon selection of the Auto item (Auto mode), the signal processing module 51 and control module 65 select a character table based on a control code included in the DVB-SI, check for a combination violation of character codes detected from a reception signal, and select one of character tables 00 and 05 based on the checking result. That is, when the first byte of the control code ranges from 0x20 to 0xFF, the signal processing module 51 and control module 65 check for a combination violation of character codes detected from a reception signal, select one of character tables 00 and 05 based on the checking result, and convert character codes into display information based on the selected character table.

Upon detection of any combination violation of character codes, the video display 14 displays the confirmation operation dialog shown in FIG. 9 or 10. The user can confirm the contents of the confirmation operation dialog, and can instruct to switch the character table via the operation module 16 or remote controller 17.

Alternatively, the user can select the item on the language setting window shown in FIG. 8 via the operation module 16 or remote controller 17. Upon selection of the Auto item (Auto mode), the signal processing module 51 and control module 65 select a character code based on a control code included in the DVB-SI, check for a combination violation of character codes detected from a reception signal, and select one of character tables 00 and 05 based on the checking result. That is, when the first byte of the control code ranges from 0x20 to 0xFF, the signal processing module 51 and control module 65 check for a combination violation of character codes detected from a reception signal, select one of character tables 00 and 05 based on the checking result, and convert character codes into display information based on the selected character table.

In this case as well, upon detection of any combination violation of character codes, the video display 14 displays the confirmation operation dialog shown in FIG. 9 or 10. The user can confirm the contents of the confirmation operation dialog, and can instruct to switch the character table via the operation module 16 or remote controller 17.

Upon selection of the Manual item (Manual mode), the video display 14 displays selection items that prompt the user to select whether character table 00 or 05 is selected as a default character table. The user can designate the default character table via the operation module 16 or remote controller 17. For example, when character table 00 is designated as the default character table, and the first byte of the control code ranges from 0x20 to 0xFF, the signal processing module 51 and control module 65 select character table 00 as the default character table, and convert character codes into display information based on selected character table 00. Also, for example, when character table 05 is designated as the default character table, and the first byte of the control code ranges from 0x20 to 0xFF, the signal processing module 51 and control module 65 select character table 05 as the default character table, and convert character codes into display information based on selected character table 05.

Alternatively, upon selection of the Manual item (Manual mode), the video display 14 may display a character table list. The user can select a desired character table via the operation module 16 or remote controller 17. After that, the signal processing module 51 and control module 65 convert character codes into display information based on a character table of the user's choice.

As described above, even upon selling a DTV to a country where a default character table is unknown, the user can easily set a default character table with the aforementioned digital television broadcast receiver. That is, the setting load of a default character table on the manufacturer, seller, and user can be reduced.

Note that the language of character strings included in the DVB-SI may be predicted based on country identification information which is input by the user or is set in advance, and a combination violation of character codes may be detected. For example, if a combination of character codes which cannot exist in a predicted language is detected, a combination violation of character codes is determined, and a character table is switched.

The various modules of the device described herein can be implemented as software applications, hardware and/or software modules, or components on one or more computers, such as servers. While the various modules are illustrated separately, they may share some or all of the same underlying logic or code.

## Claims

1. A character code conversion apparatus **characterized by** comprising:
a storage module (66, 68) configured to store first and second character tables and combination rules of character codes designated by the first character table;
a table selection module (51, 65) configured to check for a combination violation of character codes detected from a reception signal based on the combination rules of character codes, and to select one of the first and second character tables based on the checking result; and
a conversion module (51) configured to convert the detected character codes into display information based on the character table selected by the table selection module.

2. The apparatus of claim 1, **characterized in that** the combination rules of character codes include possible combination information indicating pairs of character codes which are configured to be combined of the first character table,
the table selection module is configured to select the second character table based on detection of the combination violation of the detected character codes based on the possible combination information, and
the conversion module is configured to convert the detected character codes into display information based on the second character table.

3. The apparatus of claim 1, **characterized in that** the combination rules of character codes include possible combination information indicating pairs of character codes which include diacritical mark codes and are configured to be combined of the first character table,
the table selection module is configured to select the second character table based on detection of the combination violation of the detected character codes based on the possible combination information, and
the conversion module is configured to convert the detected character codes into display information based on the second character table.

4. The apparatus of claim 1, **characterized in that** the table selection module is configured to select the first character table based on detection of control information that designates a default character table from the reception signal and non-detection of any combination violation of the detected character codes based on the combination rules of character codes, and
the table selection module is configured to select the second character table based on detection of control information that designates a default character table from the reception signal and detection of the combination violation of the detected character codes based on the combination rules of character codes.

5. The apparatus of claim 1, **characterized by** further comprising an information output module (14) configured to output switching guide information of a character table in response to detection of the combination violation of the detected character codes based on the combination rules of character codes.

6. The apparatus of claim 1, which further comprises an input module (65) configured to input an automatic selection mode for automatically selecting a character table in response to an input operation (16, 17) of the automatic selection mode by a user, and
**characterized in that** the table selection module is configured to select one of the first and second character tables based on the detection result of the combination violation of the detected character codes to have the input of the automatic selection mode as a condition.

7. The apparatus of claim 1, **characterized by** further comprising a tuning module (49, 54) configured to tune to the reception signal from a received broadcast signal.

8. A character code conversion method **characterized by** comprising:
checking a combination violation of character codes detected from a reception signal based on combination rules of character codes designated by a first character table, and selecting one of the first character table and a second character table based on the checking result; and
converting the detected character codes into display information based on the selected character table.
